(19) **Europäisches Patentamt / European Patent Office / Office européen des brevets**

(11) **EP 1 685 328 B1**

(12) **EUROPÄISCHE PATENTSCHRIFT**

(45) Veröffentlichungstag und Bekanntmachung des Hinweises auf die Patenterteilung:
**12.09.2007 Patentblatt 2007/37**

(21) Anmeldenummer: **04790991.6**

(22) Anmeldetag: **28.10.2004**

(51) Int Cl.:
*F04C 2/10* *(2006.01)*

(86) Internationale Anmeldenummer:
**PCT/EP2004/012222**

(87) Internationale Veröffentlichungsnummer:
**WO 2005/042976 (12.05.2005 Gazette 2005/19)**

(54) **DOPPEL- ODER MEHRFACHPUMPE**

DOUBLE OR MULTIPLE PUMP

POMPE DOUBLE OU MULTIPLE

(84) Benannte Vertragsstaaten:
**AT BE BG CH CY CZ DE DK EE ES FI FR GB GR HU IE IT LI LU MC NL PL PT RO SE SI SK TR**

(30) Priorität: **29.10.2003 DE 10350632**

(43) Veröffentlichungstag der Anmeldung:
**02.08.2006 Patentblatt 2006/31**

(73) Patentinhaber: **GKN Sinter Metals Holding GmbH 42477 Radevormwald (DE)**

(72) Erfinder:
• **BACHMANN, Josef 97791 Obersinn (DE)**

• **SCHWARZE, Rolf 73433 Aalen (DE)**

(74) Vertreter: **Maxton Langmaack & Partner Patentanwälte, Postfach 51 08 06 50944 Köln (DE)**

(56) Entgegenhaltungen:
**WO-A1-00/61947      DE-A1- 19 622 688
FR-A1- 2 689 185      US-A- 5 547 349**

• **PATENT ABSTRACTS OF JAPAN Bd. 013, Nr. 310 (M-850), 14. Juli 1989 (1989-07-14) -& JP 01 096484 A (KUBOTA LTD), 14. April 1989 (1989-04-14)**

**Beschreibung**

Die Erfindung betrifft eine Pumpe zur Erzeugung von wenigstens zwei Volumenströmen, insbesondere eine Schmierölpumpe für Verbrennungsmotoren, Getriebepumpe und Pumpe für vergleichbare Anwendungen.

Aus dem Stand der Technik ist eine Vielzahl von Schmierölpumpen bekannt, die ein relativ niedriges maximales Druckniveau liefern von maximal 7 bis 8 bar. Es hat sich in vielen Anwendungsbereichen in der Automobilindustrie für beispielsweise die Bereiche eines Nockenwellenverstellers, der Motorschmierung und des Getriebebereichs gezeigt, daß Pumpen benötigt werden, die für diese Einsatzzwecke kostengünstig und optimal ausgebildet sind.

Nockenwellenversteller werden beispielsweise von einer Schmierölpumpe angetrieben, die aufgrund ihres begrenzten Druckniveaus in Grenzbereichen die Funktion des Nockenwellenverstellers nicht gewährleisten kann, da das Druckniveau der Schmierölpumpe zu niedrig ist. Als Lösung ist es bekannt, daß eine zweite Pumpe als Hochdruckpumpe für die Versorgung des Nockenwellenverstellers eingesetzt wird. Der höhere Druck führt zu schnelleren Verstellzeiten des Verstellers

Aus dem Getriebebereich ist es bekannt, daß großvolumige Pumpen mit einem Volumenstrom von ungefähr 12 bis 20 cm$^3$/U eingesetzt werden, die diesen Volumenstrom mit ungefähr 10 bis 70 bar Druck umwälzen, obwohl nur ein geringer Teil des Volumenstroms mit diesen hohen Drücken für die Schaltvorgänge und Kupplungsbetätigung benötigt werden. Hierdurch entstehen große Wirkungsgradverluste der Pumpen.

Im Bereich der Motorschmierung werden kostenaufwendige Tandempumpen eingesetzt, die aus zwei Radsätzen und zwei Pumpengehäusehälften gebildet sind, wobei zur Regelung dieser Pumpen ab einem bestimmten Druck und Volumenstromniveau eine Pumpenhälfte über einen Bypass abgeschaltet wird, wodurch auch entsprechende Wirkungsgradverluste auftreten. Grundsätzlich sind aus der DE-A-196 46 359, JP 1-96484 und DE-A-199 22 792 Verzahnungsrotorsätze bekannt, die aus einem Außenring mit einer Innenverzahnung und einem darin exzentrisch aufgenommenen Zahnrad mit Außenverzahnung gebildet sind, wobei die Innenverzahnung durch im Außenring drehbar gelagerte Rollen gebildet wird und einen Zahn mehr als die Außenverzahnung aufweist, wobei der Außenverzahnung des Zahnrades eine Feinverzahnung mit einem wesentlich kleineren Modul überlagert ist und jede Rolle auf ihrem Umfang eine Feinverzahnung mit dem gleichen Modul aufweist, in die die Zähne des Zahnrades eingreifen.

Die Funktion des Verzahnungsrotorsatzes ergibt sich dadurch, daß ein Antriebsmoment über eine Antriebswelle auf den Innenrotor wirkt und diesen dreht, wobei vom verzahnten Innenrotor eine Kraft auf das Planetenrad übertragen wird, die einerseits eine Stoßkraft durch das Zentrum des Planetenrades und eine Umfangskraft ergibt, die ein Drehmoment des Planetenrades bewirkt, wobei die Stoßkraft, die auf den Lagerring wirkt, diesen in Rotation versetzt.

Der vorstehend beschriebene Verzahnungsrotorsatz ist geeignet um hohe Drücke zu erzielen.

Aufgabe der Erfindung ist es, eine Pumpe anzugeben, die es mittels eines einfaches konstruktiven Aufbaus ermöglicht, wenigstens zwei Volumenströme mit einem unterschiedlichen Druck zu erzeugen, wobei diese eine geringe Baugröße aufweisen sollte und einfach und kostengünstig herzustellen sein muß.

Die Aufgabe wird erfindungsgemäß durch eine Pumpe mit den Merkmalen vom Anspruch 1 gelöst. Durch die Aufteilung des Druckschlitzes mittels des weiteren Dichtsteges in eine Hochdruckkammer und eine Niedrigdruckkammer wird der vom Saugschlitz in den Druckschlitz geförderte Volumenstrom in zwei Volumenströme aufgeteilt, wobei in der Niedrigdruckkammer ein geringerer Druck von beispielsweise 5 bar und in der Hochdruckkammer ein höherer Druck von beispielsweise 80 bar vorliegt. Der niedrigere Druck von 5 bar reicht aus, um die Motorschmierung zu gewährleisten und der höhere Druck von 80 bar kann beispielsweise genutzt werden, um einen Nockenwellenversteller zu betätigen.

Die beiden Blinschlitze verhindern, daß axiale Kräfte auf den Radsatz wirken.

In vorteilhafter Ausgestaltung der Erfindung ist vorgesehen, daß der Radsatz als Planetenrotorsatz ausgebildet ist. Ein Planetenrotorsatz ist radial selbstdichtend, d.h., daß die Verdrängerkammern durch eine Mikroverzahnung absolut dicht von einander getrennt sind. Eine Verdrängerkammer wird durch zwei feinverzahnte Zähne des Innenrotors und zwei mit diesen in Eingriff stehenden Planetenrädern gebildet, die durch die Dichtstege axial abgedichtet werden. Beim Drehen des Radsatzes verkleinert sich das Volumen der Verdrängerkammer sinusförmig über die Druckkammer 1, wodurch ein Teil des Mediums in die Niedrigdruckkammer verdrängt wird. Der verbleibende Teil des Mediums wird beim Überqueren des weiteren Dichtsteges absolut dicht in der Verdrängerkammer des Planetenrotors eingeschlossen und in die Hochdruckkammer befördert, wo der Rest des Mediums bis zum "oberen Totpunkt" des Radsatzes verdrängt wird.

Grundsätzlich ist es möglich, daß der Druckschlitz durch das vorsehen weiterer Dichtstege unterteilt wird, so daß weitere Druckkammern und Volumenströme erzeugt werden, wobei dieses nur durch die Größe des Radsatzes und dessen Zähnezahl begrenzt wird. Durch die erfindungsgemäße Pumpe mit einem Planetenrotorsatz sind Druckdifferenzen zwischen der Niedrigdruckkammer und der Hochdruckkammer von bis zu 120 bar erzielbar.

In zweckmäßiger Ausgestaltung der Erfindung ist vorgesehen, daß der Radsatz als Gerotorsatz oder als Duozentricradsatz ausgebildet ist, wobei bei einem Einsatz dieser Radsatztypen nur kleinere Druckdifferenzen zwischen der Niedrigdruckkammer und der Hochdruckkammer erzielt werden können, nämlich ungefähr eine Druckdifferenz von maximal 20 bar.

In vorteilhafter Ausgestaltung der Erfindung ist vorgesehen, daß der weitere Dichtsteg in einem Winkel $\alpha_3$ von

30° bis 120°, zur Achse angeordnet ist.

In weiterer vorteilhafter Ausgestaltung der Erfindung ist vorgesehen, daß der weitere Dichtsteg sich über einen Winkel $\alpha_2$ von 20° bis 80°, erstreckt. Die Winkel $\alpha_1$ und $\alpha_2$ sind gleich groß.

In besonders vorteilhafter Ausgestaltung der Erfindung ist vorgesehen, daß der weitere Dichtsteg verschiebbar in dem Pumpendeckel und dem Pumpengehäuse angeordnet ist. Hierdurch ist es möglich, daß die Volumenströme und -drücke während des Betriebes der Pumpe in Abhängigkeit von den geforderten Werten verändert werden können. Ein beweglicher Dichtsteg teilt den Druckschlitz in eine Niederdruckkammer und eine Hochdruckkammer. Der Dichtsteg ist beispielsweise mit einem rechtwinklig zu einer Antriebswelle des Innenrotors angeordneten Steuerkolben verbunden, wobei durch eine vorgespannte Druckfeder, die auf den Steuerkolben wirkt, der erforderliche Grenzdruck eingestellt wird. Im Bereich des ersten Dichtsteges ist eine Bypassregelung vorgesehen. Eine Bypassbohrung verbindet die Hochdruckkammer mit dem Saugschlitz. Die Bypassbohrung wird durch die Anordnung eines Regelbolzens geschlossen oder geöffnet. Die Stellung des Regelbolzens unterbricht die Bypassbohrung und trennt die Hochdruckkammer durch den ersten Dichtsteg vom Saugschlitz. Die Stellung des Regelbolzens öffnet die Bypassbohrung und stellt eine Verbindung (Bypass) zwischen Hochdruckkammer und Saugschlitz her. Das in der Hochdruckkammer verdrängte Medium kann somit drucklos in den Saugschlitz abfließen. Die Regelung durch den Regelbolzen kann kostengünstig durch ein 2/2 elektrisches Wegeventil ausgeführt werden, das über schnelle Schaltzeiten verfügt. Dadurch besteht die Möglichkeit, den Volumenstrom der Hochdruckkammer sehr schnell zu- und abzuschalten. Bei geschlossener Bypassbohrung wird in der Hochdruckkammer Druck aufgebaut, der über den Druckkanal auf den Steuerkolben wirkt. Beim Überschreiten des eingestellten Grenzdruckes in der Hochdruckkammer wird der Steuerkolben gegen die Federkraft der Druckfeder verschoben. Da der Steuerkolben mit dem Dichtsteg verbunden ist, wird dieser gegen die Laufrichtung des Planetenrotorsatzes verschoben. Die Hochdruckkammer wird dadurch vergrößert und der Volumenstrom steigt entsprechend an.

In weiterer vorteilhafter Ausgestaltung der Erfindung ist es vorgesehen, daß die Größe der Hochdruckkammer und/oder der Niedrigdruckkammer veränderbar ist. Hierdurch wird ebenfalls erreicht, daß die Volumenströme bzw. -drücke während des Betriebes der Pumpe in Abhängigkeit von den geforderten Größen verändert werden können.

In zweckmäßiger Ausgestaltung der Erfindung ist es vorgesehen, daß der Pumpendeckel, das Pumpengehäuse und/oder der Radsatz aus Sintermetall hergestellt sind. Die Herstellung aus Sintermetall ermöglicht einerseits eine einfache und kostengünstige Fertigung der Bauteile und andererseits werden die Notlaufeigenschaften verbessert, da sich Schmierstoff in den Poren einlagern kann.

In besonders vorteilhafter Ausgestaltung der Erfindung ist vorgesehen, daß die Pumpe zur Betätigung eines Nockenwellenverstellers, zur Motorschmierung, zur Getriebeschmierung und/oder Unterstützung der Schaltvorgänge und für alle sonstigen Anwendungen im Automobilbereich und anderen Bereichen mit vergleichbarem Anforderungsprofil verwendet wird. Es kann beispielsweise ein erster Volumenstrom für die Motorschmierung verwendet werden, wobei dieser einen Druck von max. 6 bar aufweisen könnte. Ein zweiter Volumenstrom wird zum Betrieb des Nockenwellenverstellers benötigt, wobei dieser einen Druck zwischen 40 bar und 100 bar aufweisen könnte. Wird der Nockenwellenversteller mit höheren Drücken betrieben, führt das zu schnelleren Verstellzeiten des Verstellers. Hierdurch werden ruhiger Motorenlauf bei gleichzeitiger Senkung der Leerlaufdrehzahlen auf 450 bis 500 U/min möglich. Dementsprechend verringern sich die Abgasrohemmissionen und der Verbrauch. Des weiteren werden Leistung, Drehmoment und Gesamtwirkungsgrad des Motors in dem Drehzahlbereich 450 bis 500 U/min verbessert. Die Baugröße des Verstellers kann erheblich verkleinert werden. Dies bedeutet eine Reduzierung der rotierenden Massen und somit eine Gewichtsreduzierung. Des weiteren kann die Verriegelung des Nockenwellenverstellers entfallen und es ist eine Herabsetzung der Leerlaufdrehzahl des Motors von 650 U/min auf 450-500 U/min möglich. Hierdurch wird unter anderem eine Einsparung von Kraftstoff, eine schnellere und effektivere Verstellung der Nockenwelle, und eine kleinere Baugröße der Pumpe ermöglicht. Ferner besteht eine Gewichtsersparnis aufgrund der geringeren Größe der Pumpe und es können größere Fertigungstoleranzen akzeptiert werden, wodurch eine Kosteneinsparung möglich ist.

In weiterer vorteilhafter Ausgestaltung der Erfindung ist vorgesehen, daß die beiden Volumenströme regelbar sind.

Eine weitere Einsatzmöglichkeit der erfindungsgemäßen Pumpe besteht beispielsweise in einem automatisiertes Schaltgetriebe oder Doppelkupplungsgetriebe. Der Stand der Technik ist zur Zeit, daß das gesamte Getriebeöl mit einer Pumpe mit bis zu 20 bar Druck umgewälzt werden muß, obwohl nur ein kleiner Teil des Getriebeöls mit diesem Druck für die Schaltvorgänge benötigt wird. Mit der erfindungsgemäßen Pumpe ist es möglich, die Volumenströme und Drücke so aufzuteilen, daß Volumenstrom und Druck für die Schmierung des Getriebes sowie für die Schaltvorgänge eingestellt werden können. Durch den Einsatz einer erfindungsgemäßen Pumpe kann die Verlustleistung erheblich reduziert und die Ölalterung durch die Absenkung der Leerlaufdrehzahl vergleichsweise reduziert werden. Dieses wird mit dem nachstehenden Beispiel dargelegt:

Pumpe für ein automatisiertes Schaltgetriebe nach dem Stand der Technik:

Die Anforderung an die Pumpe ist, daß diese max. 28 1/min bei einem Druck von 20 bar umwälzen soll.

$$P = Q * p/600 = 28 \text{ l/min} * 20/600 = \underline{0,93KW}$$

**Pumpe für ein automatisiertes Schaltgetriebe mit einer Erfindungsgemäßen Pumpe:**

Es werden 25% des Volumenstroms mit 20 bar für den Schaltvorgang eingesetzt und 75% des Volumenstroms mit 3 bar für die Getriebeschmierung.

$$7 \text{ l/min} * 20/600 + 21 \text{ l/min} * 3/600 = \underline{0,335KW}$$

Es ergibt sich somit eine Leistungsersparnis der erfindungsgemäßen Pumpe von ca. 64%.
Ferner ist es durch eine Druckerhöhung auf 50 bar und eine entsprechende Volumenstromverkleinerung möglich die Schaltzeiten zu verkürzen und die Hydraulikkolben für die Schaltvorgänge können erheblich verkleinert werden, wodurch Bauraum, Gewicht und Kosten gespart werden.

Pumpe für ein CVT-Getriebe (stufenloses Getriebe) nach dem Stand der Technik:

Auch hier ist der Stand der Technik wie bei einem automatisierten Schaltgetriebe. Bei einem CVT-Getriebe wird der hohe Druck für die Verstellung der Kettenscheiben (Riemenscheiben) benötigt. Eingesetzt wird eine Radialkolbenpumpe.

| | | |
|---|---|---|
| Lastenheft: | Radialkolbenpumpe: | 18,2 cm$^3$/U Konstantpumpe |
| | Drehzahl: | 6000 1/min |
| | Druck: | 60bar |
| | Volumenstrom: | 30 1/min |

Es wird eine vereinfachte Vergleichsrechnung wie folgt durchgeführt:

1. Radialkolbenpumpe:

$$Md = V * p (20*pi) = 18,2 * 60/(20*pi) = 17,37 \text{ Nm}$$

$$P = Md * U/min/9500 = 17,37 * 6000/9500 = \underline{10,97KW}$$

2. Erfindungsgemäße Pumpe.

1/3 des Volumenstroms bei 60 bar, 2/3 Volumenstrom bei 5 bar.

$$6,06 * 60/(20*pi) + 12,12 * 5/(20*pi) = 6,74 \text{ Nm}$$

$$6,74 \text{ Nm} * 6000/U/min/9500 = \underline{4,25KW}$$

Hierdurch erfolgt eine Leistungsersparnis von 61,2%.

Beide Rechenbeispiele sind reine hydraulische Leistungen, es wurden keine Reibungsverluste usw. mit eingerechnet. Weiterhin ist es möglich, beide Volumenströme zu regeln, wodurch eine zusätzliche Leistungseinsprung möglich ist.

Im Stand der Technik werden beispielsweise sauggeregelte Radialkolbenpumpen eingesetzt, welche zu einer großen Verschäumung und Erwärmung des Mediums führen und die Aufnahmeleistung der Pumpe verringert den gesamten Wirkungsgrad des CVT-Getriebes stark.

Bei einigen Anwendungen (Doppelkupplungsgetriebe) wird der Volumenstrom der Hochdruckkammer nur kurzfristig beim Schalten der Gänge benötigt. Es wäre ein großer Vorteil, den Volumenstrom der Hochdruckkammer (ca. 30-40 bar) in der nicht benötigten Zeit durch einen Bypass drucklos in den Saugbereich umzuleiten und bei den Schaltvorgängen wieder zuzuschalten. Weiter wäre es ein Vorteil, bei den Schaltvorgängen den Volumenstrom der Hochdruckkammer kurzfristig zu erhöhen, dies würde den Schaltzyklus erheblich verkürzen. Durch den Einbau eines variablen Dichtstegs 11 wäre dies kostengünstig machbar. Diese Maßnahmen reduzieren die Aufnahmeleistung der Pumpe erheblich.

Die Erfindung wird anhand schematischer Zeichnungen näher erläutert. Es zeigen:

Fig. 1     ein Pumpengehäuse in Plattenbauweise mit einem exzentrisch eingelagerten Planetenrotorsatz,

Fig. 2     einen Schnitt A-A aus Fig. 1. Schnitt der Linie C-C zeigt den Pumpendeckel 1 mit dem Saug- und Druckschlitz (Stand der Technik),

Fig. 3     einen Schnitt der Linie B-B aus Fig. 1,

Fig. 4     eine Ansicht der Linie D-D aus Fig. 3 (Pumpendeckel 1),

Fig. 5     eine Ansicht des Pumpenflansches 4 mit der Anordnung der Blindsaug- und Blinddruckschlitze,

Fig. 6     eine Ausbildung der Verdrängerkammer 20,

Fig. 7     eine Möglichkeit den Dichtsteg verschiebbar zu gestalten,

Fig. 8     eine Ansicht eines Gerotorsatzes,

Fig. 9     eine Ansicht eines Duozentricradsatzes,

Fig. 10    eine Bypassregelung,

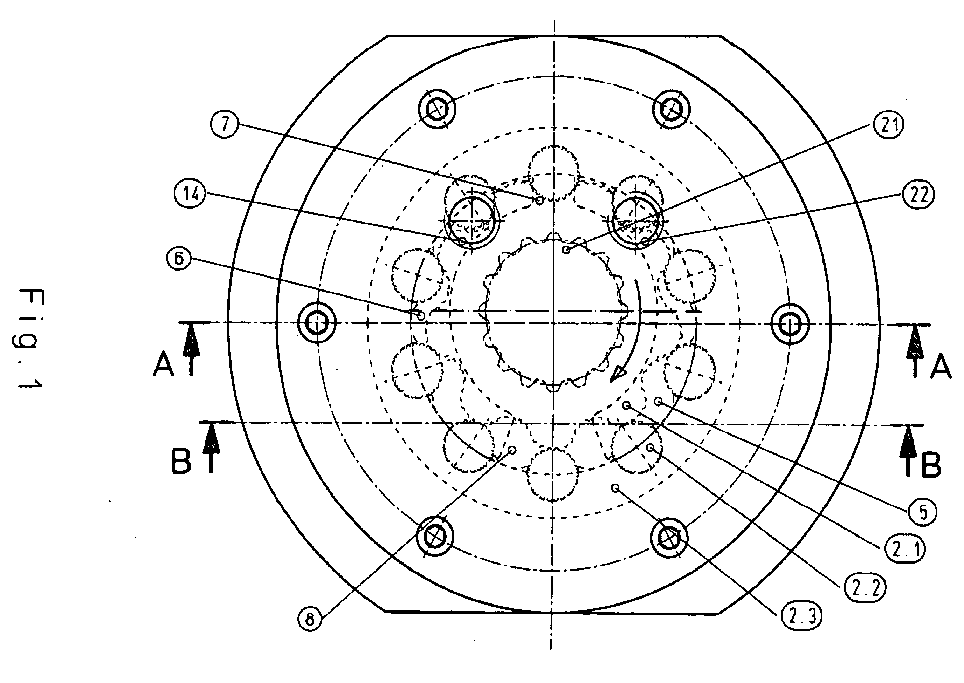

Fig. 1 zeigt ein Pumpengehäuse in Plattenbauweise in dem ein Planetenrotorsatz 2 exzentrisch gelagert ist. Die Funktion des Verzahnungsrotorsatzes ergibt sich dadurch, daß ein Antriebsmoment in Richtung des Pfeils über eine Antriebswelle 21 auf den Innenrotor 2.1 wirkt und diesen dreht, wobei vom verzahnten Innenrotor 2.1 eine Kraft auf das Planetenrad 2.2 übertragen wird, die einerseits eine Stoßkraft durch das Zentrum des Planetenrades und eine Umfangskraft ergibt, die ein Drehmoment des Planetenrades 2.2 bewirkt, wobei die Stoßkraft, die auf den Lagerring 2.3 wirkt, diesen in Rotation versetzt.

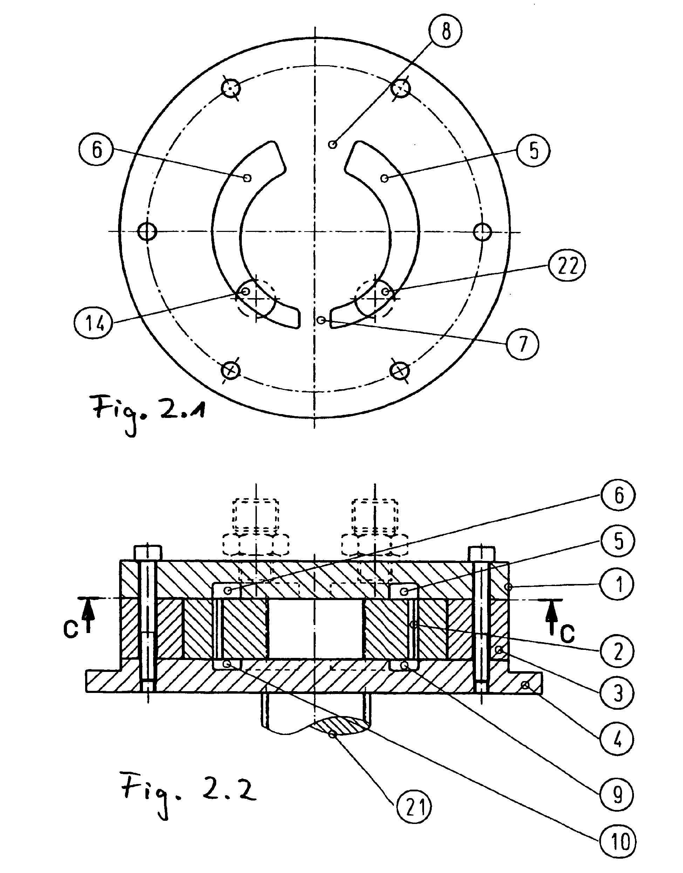

Fig. 2.1 zeigt einen Schnitt C-C aus Fig. 2.2 durch ein Pumpengehäuse in Plattenbauweise nach dem Stand der Technik hinsichtlich der Saug- und Druckschlitze sowie Dichtstege. Der Pumpendeckel 1 weist der vertieft eingearbeiteten Saugschlitz 5 und der Druckschlitz 6 auf. Der Saugschlitz 5 und der Druckschlitz 6 werden durch den Dichtsteg 7 im Eingriffsbereich des Planetenradsatzes 2 und dem Dichtsteg 8 dem Eingriffsbereich gegenüberliegend voneinander getrennt. Des weiteren sind der Saugschlitz 5 und der Druckschlitz 6 mit einem Sauganschluß 22 und einem Druckanschluß 14 versehen.

Fig. 2.2 zeigt einen Schnitt durch ein Pumpengehäuse in Plattenbauweise nach dem Stand der Technik hinsichtlich der Saug- und Druckschlitze sowie Dichtstege. Das Pumpengehäuse besteht aus einer Pumpenringplatte 3 in der ein Planetenrotorsatz 2 exzentrisch eingelagert ist. Die Pumpenringplatte 3 mit dem in ihr exzentrisch gelagerten Planetenrotorsatz 2 wird, durch den Pumpendeckel 1 und den Pumpenflansch 4 axial abgedichtet. In den Pumpendeckel 1 sind der Saugschlitz 5 und der Druckschlitz 6 vertieft eingearbeitet. Des weiteren sind der Saugschlitz 5 und der Druckschlitz 6 mit einem Sauganschluß 22 und einem Druckanschluß 14 versehen. In den Pumpenflansch 4 sind vertieft der Saugblindschlitz 9 und der Druckblindschlitz 10 eingearbeitet. Die Geometrie entspricht genau dem Saugschlitz 5 und dem Druckschlitz 6.

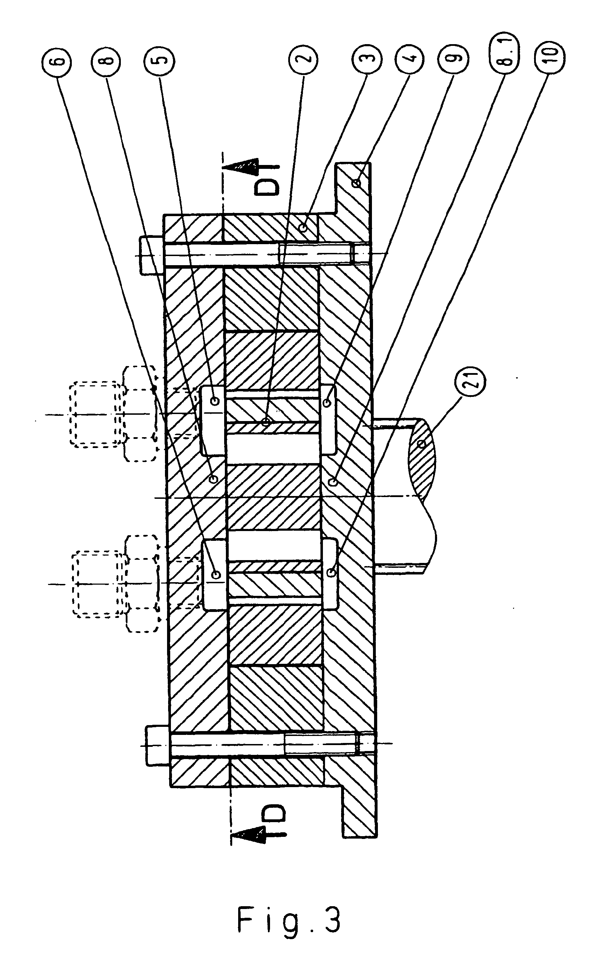

Fig. 3 zeigt einen Schnitt entlang der Linie B-B aus Fig. 1 durch ein erfindungsgemäßes Pumpengehäuse in Plattenbauweise, bestehend aus einem Pumpendeckel 1, einer Pumpenringplatte 3, einem Planetenrotorsatz 2 und einem Pumpenflansch 4, wobei der Planetenrotorsatz 2 aus dem Innenrotor 2.1, den Planetenrädern 2.2 und dem Lagerring 2.3 für die Planetenrotoren gebildet wird. Der Innenrotor 2.1 wird von der Antriebswelle 21 angetrieben. In den Pumpendeckel 1 sind ein Saugschlitz 5 und ein Druckschlitz 6 vertieft eingearbeitet. Der Dichtsteg 8 trennt den Saugschlitz 5 von dem Druckschlitz 6. In der Pumpenringplatte 3 ist ein Planetenrotorsatz 2 exzentrisch eingelagert. Der Saugblindschlitz 9 und der Druckblindschlitz 10 sind vertieft in den Pumpenflansch 4 eingearbeitet. Der Dichtsteg 8.1 trennt den Saugblindschlitz 9 von dem Druckblindschlitz 10. Des weiteren dichten der Dichtsteg 8 und der Dichtsteg 8.1 die Verdrängerkammer 20 des Planetenrotorsatzes 2 axial ab.

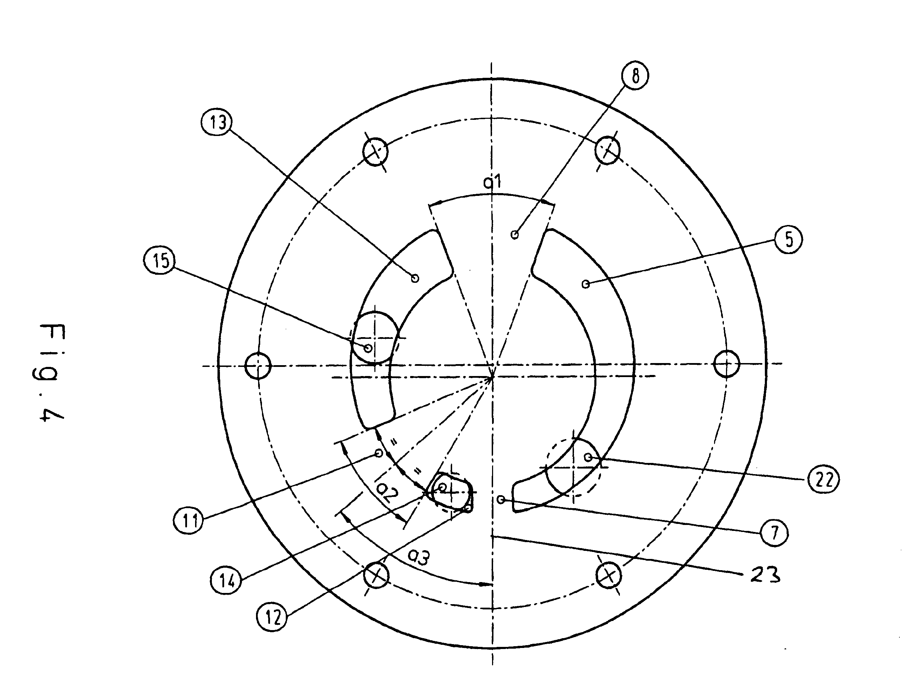

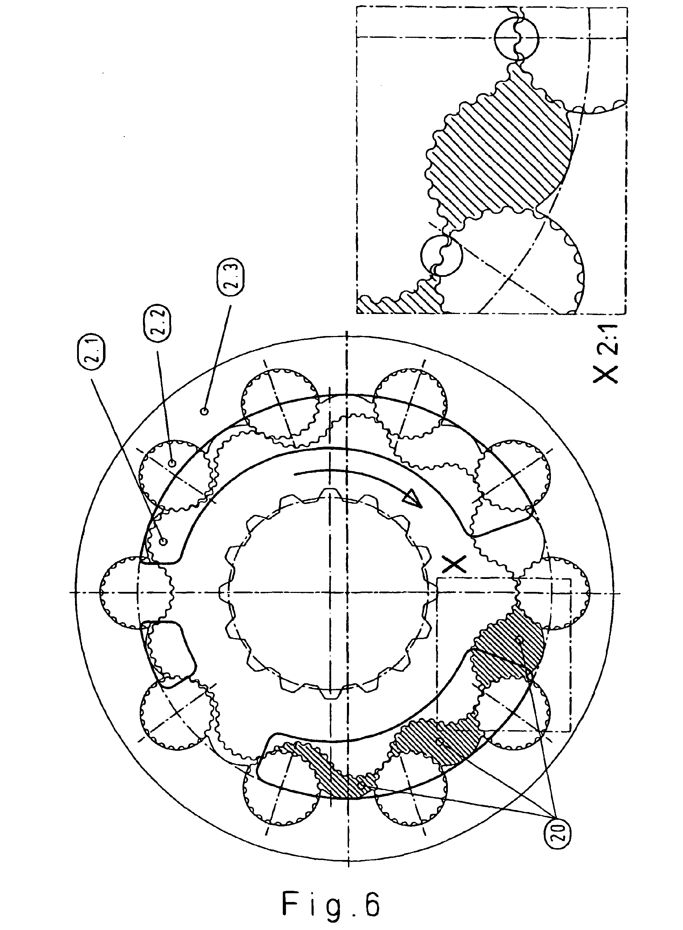

Fig. 4 zeigt einen Schnitt entlang der Linie D-D in Fig. 3. Die Ansicht zeigt den Pumpendeckel 1 mit dem vertieft angebrachten Saugschlitz 5 und Druckschlitz 6. Der Saugschlitz 5 ist mit einem Sauganschluß 22 versehen. Der Druckschlitz 6 wird durch einen weiteren Dichtsteg 11 in eine Niederdruckkammer 13 und eine Hochdruckkammer 12 aufgeteilt. Der Dichtsteg 8, der dem Eingriffsbereich des Planetenradsatzes 2 gegenüberliegt, trennt den Saugschlitz 5 von der Niederdruckkammer 13. Der Dichtsteg 11 trennt die Niederdruckkammer 13 von der Hochdruckkammer 12. Die Hochdruckkammer 12 wird durch den Dichtsteg 7, der im Eingriffsbereich des Planetenradsatzes 2 liegt, von dem Saugschlitz 5 getrennt. Die Niederdruckkammer 13 ist mit einem Druckanschluß 15 und die Hochdruckkammer 12 mit dem Druckanschluß 14 ausgestattet. Die Größe der Winkel $\alpha 1$ und $\alpha 2$ der Dichtstege 8 und 11 müssen so gestaltet sein, daß sie die zwei Kontaktpunkte zwischen verzahntem Innenrotor 2.1 und dem beiden Planetenrädern 2.2 überlagern. Die Winkel $\alpha 1$ und $\alpha 2$ sind gleich groß (Fig. 6 Einzelheit X). Der Winkel $\alpha 3$ bestimmt die Lage des Dichtsteges 11 und somit die Größe der Niederdruckkammer 13 und der Hochdruckkammer 12, wodurch die Aufteilung der Volumenströme erfolgt.

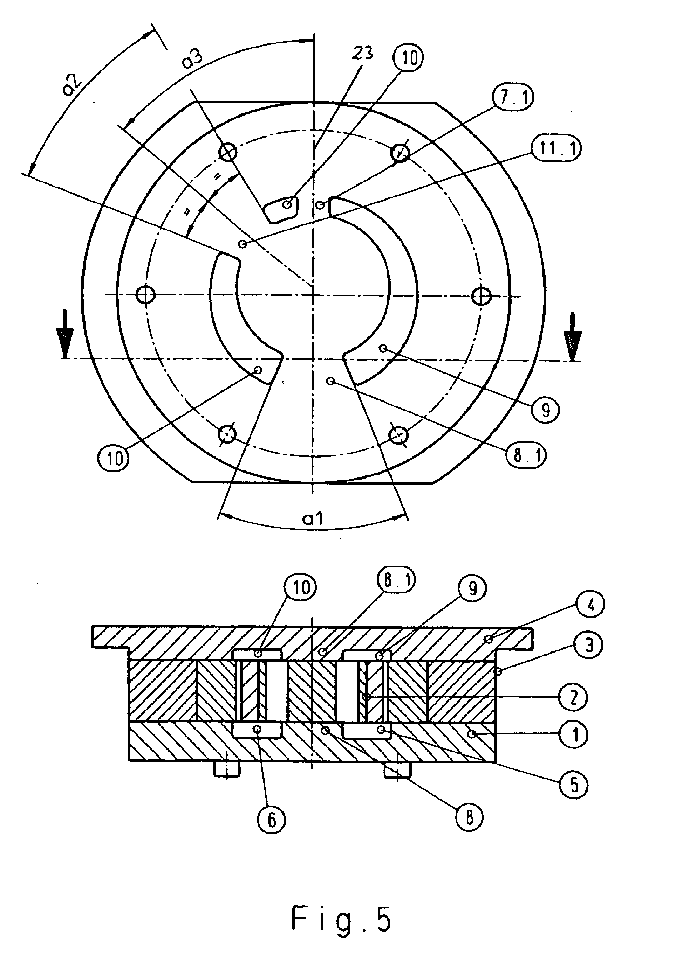

Fig. 5 zeigt den Pumpenflansch 4 in den der Saugblindschlitz 9 und der Druckblindschlitz 10, die durch den Dichtsteg 11.1 getrennt werden, vertieft eingearbeitet sind. Die Anordnung ist gleich wie in Fig. 4.

Fig. 6 zeigt die Ansicht und Lage der Verdrängerkammer 20 über dem Saugschlitz 5 der Niederdruckkammer 13 und der Hochdruckkammer 12. Im Bereich der Niederdruckkammer 13 und der Hochdruckkammer 12 ist dargestellt, daß das Volumen der Verdrängerkammer 20 sich kontinuierlich verringert, wodurch eine Drucksteigerung erreicht wird. Der höchste Druck besteht am Druckanschluß 14 der Hochdruckkammer 12. Einzelheit X zeigt die Kontaktpunkte (radiale Flächen) zwischen Innenrotor 2.1 und Planetenrädern 2.2, die die Verdrängerkammer 20 durch den Eingriff der Mikroverzahnung radial abdichtet.

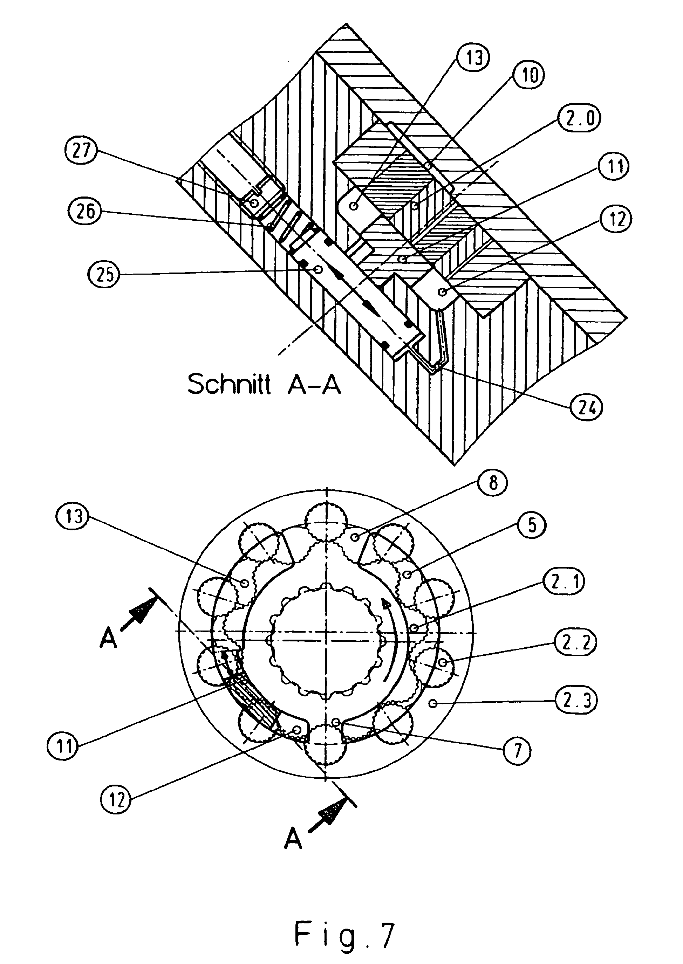

Fig. 7 zeigt in einer Draufsicht den Pumpendeckel 1 mit dem vertieft angebrachten Saugschlitz 5 und dem Druckschlitz 6. Der Druckschlitz 6 wird durch das Anbringen eines beweglichen Dichtsteges 11 in eine Niederdruckkammer 13 und eine Hochdruckkammer 12 aufgeteilt. Schnitt A-A zeigt eine Möglichkeit den Dichtsteg 11 verschiebbar zu gestalten. Der Dichtsteg 11 ist mit einem rechtwinklig zur Antriebswelle 21 angeordneten Steuerkolben 25 verbunden, wobei durch eine vorgespannte Druckfeder 26, die auf den Steuerkolben 25 wirkt, der erforderliche Grenzdruck eingestellt wird. Beim Überschreiten des Grenzdruckes in der Hochdruckkammer 12 wird über den Druckkanal 24 der Steuerkolben 25 stirnseitig druckbeaufschlagt und bewegt diesen gegen die Federkraft und Laufrichtung des Planetenrotorsatzes 2. Gleichzeitig wird der Dichtsteg 11, der mit dem Steuerkolben 25 in Verbindung steht, gegen die Laufrichtung des Planetenrotorsatzes verschoben, wodurch die Hochdruckkammer 12 vergrößert und die Niederdruckkammer 13 verkleinert wird. Das wiederum bewirkt, daß der Volumenstrom der Hochdruckkammer 12 größer und der Volumenstrom der Niederdruckkammer 13 kleiner wird. Zur Abdichtung des Steuerkolbens 25 ist eine Dichtung vorgesehen.

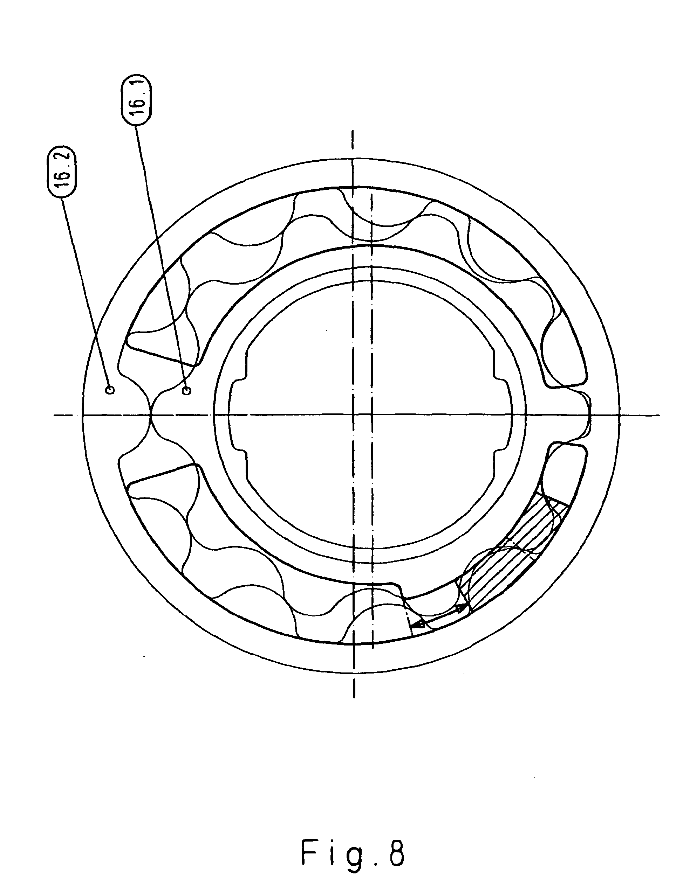

Fig. 8 zeigt einen Gerotorsatz mit einem Innenrotor 16.1 und einem Außenrotor 16.2, wobei der Gerotorsatz ähnlich funktioniert wie der Planetenrotorsatz 17. Die erfindungsgemäße Gestaltung und Anordnung der Saugschlitze, Druckschlitze, Blindschlitze und Dichtstege ist ähnlich wie in den Fig. 4, 5 und 7 dargestellt.

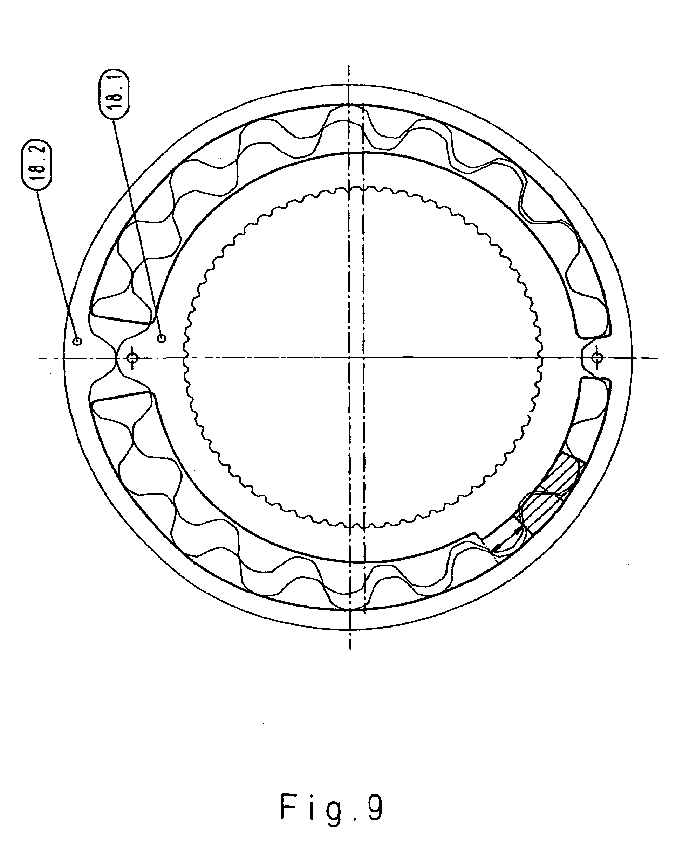

Fig. 9 zeigt einen Duozentricradsatz mit einem Innenrotor 18.1 und einem Außenrotor 18.2, wobei der Duozentricradsatz ähnlich funktioniert wie der Planetenrotorsatz 17. Die erfindungsgemäße Gestaltung und Anordnung der Saugschlitze, Druckschlitze, Blindschlitze und Dichtstege ist ähnlich wie in den Fig. 4, 5 und 7 dargestellt.

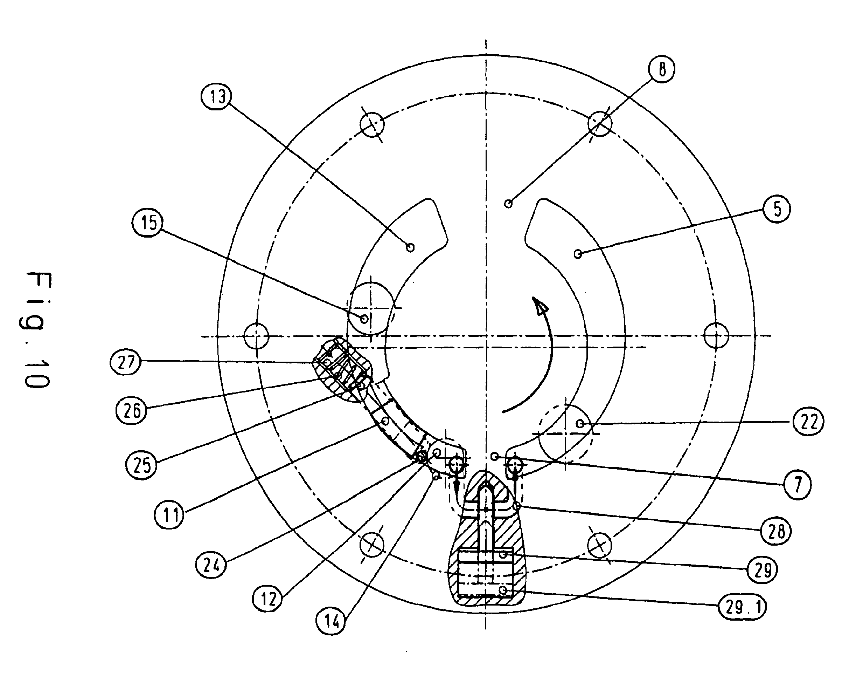

Fig. 10 zeigt den Pumpendeckel 1 mit dem vertieft angebrachten Saugschlitz 5 und dem Druckschlitz 6. Der Druckschlitz 6 wird durch das Anbringen eines beweglichen Dichtsteges 11 in eine Niederdruckkammer 13 und eine Hochdruckkammer 12 aufgeteilt. Der Dichtsteg 11 ist mit einem rechtwinklig zur Antriebswelle 21 angeordneten Steuerkolben 25 verbunden, wobei durch eine vorgespannte Druckfeder 26, die auf den Steuerkolben 25 wirkt, der erforderliche Grenzdruck eingestellt wird. Im Bereich des Dichtsteges 7 ist eine Bypassregelung angebracht. Die Bypassbohrung 28 verbindet die Hochdruckkammer 12 mit dem Saugschlitz 5. Die Bypassbohrung 28 wird durch die Anordnung eines Regelbolzens 29 und 29.1 geschlossen oder geöffnet. Die Stellung des Regelbolzens 29 unterbricht die Bypassbohrung 28 und trennt die Hochdruckkammer 12 durch den Dichtsteg 7 vom Saugschlitz 5. Die Stellung des Regelbolzens 29.1 öffnet die Bypassbohrung 28 und stellt eine Verbindung (Bypass) zwischen Hochdruckkammer 12 und Saugschlitz 5 her. Das in der Hochdruckkammer 12 verdrängte Medium kann somit drucklos in den Saugschlitz 5 abfließen. Die Regelung durch den Regelbolzen 29, 29.1 kann kostengünstig durch ein 2/2 e-lektr. Wegeventil ausgeführt werden, das über schnelle Schaltzeiten verfügt. Dadurch besteht die Möglichkeit, den Volumenstrom der Hochdruckkammer 12 sehr schnell zu- und abzuschalten. Bei geschlossener Bypassbohrung 28 wird in der Hochdruckkammer 12 Druck aufgebaut, der über den Druckkanal 24 auf den Steuerkolben 25 wirkt. Beim Überschreiten des eingestellten Grenzdruckes in der Hochdruckkammer 12 wird der Steuerkolben 25 gegen die Federkraft der Druckfeder 26 verschoben. Da der Steuerkolben 25 mit dem Dichtsteg 11 verbunden ist, wird dieser gegen die Laufrichtung des Planetenrotorsatzes 2 verschoben. Die Hochdruckkammer 12 wird dadurch vergrößert und der Volumenstrom steigt entsprechend an.

**Patentansprüche**

1. Pumpe zur Erzeugung von wenigstens zwei Volumenströmen mit unterschiedlichem Druck, bestehend aus einem Pumpendeckel (1), einem Pumpengehäuse (4), einem in diesem exzentrisch gelagerten Radsatz (2), wobei das Pumpengehäuse (4) einen Saugschlitz (5) und einen Druckschlitz (6) aufweist, die durch einen ersten Dichtsteg (7, 7.1) und einem diesen gegenüberliegenden zweiten Dichtsteg (8, 8.1) voneinander getrennt sind, wobei der Druckschlitz (6) mit wenigstens einem weiteren Dichtsteg (11, 11.1) in eine Hochdruckkammer (12) und eine Niedrigdruckkammer (13) unterteilt wird, wobei jede Druckkammer (12, 13) einen Druckanschluß (14, 15) aufweist, **dadurch gekennzeichnet, daß** in dem Pumpendeckel (1) ein Saugblindschlitz (9) und ein Druckblindschlitz (10) eingearbeitet sind, die gegenüber dem Saugschlitz (5) und dem Druckschlitz (6) -angeordnet sind und die gleiche Geometrie wie diese aufweisen.

2. Pumpe nach Anspruch 1, **dadurch gekennzeichnet, daß** der Radsatz (2), als Planetenrotorsatz (17) ausgebildet ist.

3. Pumpe nach Anspruch 1 oder 2, **dadurch gekennzeichnet, daß** der Radsatz (2), als Gerotorsatz (16) ausgebildet ist.

4. Pumpe nach einem der Ansprüche 1 bis 3, **dadurch gekennzeichnet, daß** der Radsatz (2), als Duocentricradsatz (18) ausgebildet ist oder auf einer vergleichbaren Verzahnungsgeometrie basiert.

5. Pumpe nach einem der Ansprüche 1 bis 4, **dadurch gekennzeichnet, daß** der weitere Dichtsteg (11) in einem Winkel $\alpha_3$ von 30° bis 120° zur Achse (23) angeordnet ist;

6. Pumpe nach einem der Ansprüche 1 bis 5, **dadurch gekennzeichnet, daß** der zweite Dichtsteg (8) und der weitere Dichtsteg (11) sich über einen Winkel $\alpha_1$, $\alpha_2$ von 20° bis 80° erstrecken.

7. Pumpe nach einem der Ansprüche 1 bis 6, **dadurch gekennzeichnet, daß** der weitere Dichtsteg (11, 11.1) verschiebbar in dem Pumpendeckel (1) und/oder dem Pumpengehäuse (3) angeordnet ist.

8. Pumpe nach einem der Ansprüche 1 bis 7, **dadurch gekennzeichnet, daß** die Größe der Hochdruckkammer (12) und/oder der Niedrigdruckkammer (13) veränderbar ist.

9. Pumpe nach einem der Ansprüche 1 bis 8, **dadurch gekennzeichnet, daß** der Pumpendeckel (1), das Pumpengehäuse (3), und/oder der Radsatz (2) aus Sintermetall hergestellt sind.

10. Verwendung der Pumpe nach einem der Ansprüche 1 bis 9, zur Betätigung eines Nockenwellenverstellers, zur Motorschmierung, zur Getriebeschmierung und/oder Unterstützung der Schaltvorgänge.

**Claims**

1. A pump for generating at least two volume flows of different pressures, consisting of a pump cover (1), a pump housing (4), a gear system (2) mounted eccentrically therein, the pump housing (4) having a suction slot (5) and a pressure slot (6) which are separated from one another by a first sealing land (7, 7.1) and a second sealing land (8, 8.1) located opposite it, the pressure slot (6) being subdivided by at least one further sealing land (11, 11.1) into a high-pressure chamber (12) and a low-pressure chamber (13), each pressure chamber (12, 13) having a pressure connection (14, 15), **characterised in that** a dummy suction slot (9) and a dummy pressure slot (10) are machined into the pump cover (1), which dummy slots are located opposite the suction slot (5) and the pressure slot (6) and have the same geometry as these.

2. A pump according to Claim 1, **characterised in that** the gear system (2) is in the form of a planetary rotor system (17).

3. A pump according to Claim 1 or 2, **characterised in that** the gear system (2) is in the form of a gerotor system (16).

4. A pump according to one of Claims 1 to 3, **characterised in that** the gear system (2) is in the form of a duocentric gear system (18) or is based on a comparable tooth geometry.

5. A pump according to one of Claims 1 to 4, **characterised in that** the further sealing land (11) is arranged at an angle $\alpha_3$ of 30° to 120° to the axis (23).

6. A pump according to one of Claims 1 to 5, **characterised in that** the second sealing land (8) and the further sealing land (11) extend at an angle $\alpha_1$, $\alpha_2$ of 20° to 80°.

7. A pump according to one of Claims 1 to 6, **characterised in that** the further sealing land (11, 11.1) is arranged displaceably in the pump cover (1) and/or the pump housing (3).

8. A pump according to one of Claims 1 to 7, **characterised in that** the size of the high-pressure chamber (12) and/or of the low-pressure chamber (13) can be changed.

9. A pump according to one of Claims 1 to 8, **characterised in that** the pump cover (1), the pump housing (3) and/or the gear system (2) are made of sintered metal.

10. The use of the pump according to one of Claims 1 to 9 for actuating a camshaft adjuster, for lubricating an engine, for lubricating gears and/or assisting in changing gears.

### Revendications

1. Pompe permettant la production d'au moins deux débits volumiques à une pression différente, constituée d'un couvercle de pompe (1), d'un carter de pompe (4), d'un engrenage excentré (2), le carter de pompe (4) présentant une fente d'admission (5) et un fente de refoulement (6) séparées l'une de l'autre par une première traverse étanche (7, 7.1) et une deuxième traverse étanche (8, 8.1) située en face de celle-ci, la fente de refoulement (6) étant divisée, avec au moins une autre traverse étanche (11, 11.1) en une chambre haute pression (12) et une chambre basse pression (13), chaque chambre de pression (12, 13) présentant un raccord de refoulement (14, 15), **caractérisée en ce qu'**une fente borgne d'admission (9) et une fente borgne de refoulement (10) sont formées dans le couvercle de pompe (1) et disposées en face de la fente d'admission (5) et de la fente de refoulement (6) et ont la même géométrie que celles-ci.

2. Pompe selon la revendication 1, **caractérisée en ce que** l'engrenage (2) est un jeu de rotors satellites (17).

3. Pompe selon la revendication 1 ou la revendication 2, **caractérisée en ce que** l'engrenage (2) est un engrenage gerotor (16).

4. Pompe selon l'une quelconque des revendications 1 à 3, **caractérisée en ce que** l'engrenage (2) est un engrenage duocentrique (18) ou bien s'appuie sur une géométrie à denture comparable.

5. Pompe selon l'une quelconque des revendications 1 à 4, **caractérisée en ce que** l'autre traverse étanche (11) forme en angle $\alpha_3$ de 30 à 120° par rapport à l'axe (23).

6. Pompe selon l'une quelconque des revendications 1 à 5, **caractérisée en ce que** la deuxième traverse étanche (8) et l'autre traverse étanche (11) s'étendent sur un angle $\alpha_1$, $\alpha_2$ de 20 à 80°.

7. Pompe selon l'une quelconque des revendications 1 à 6, **caractérisée en ce que** l'autre traverse étanche (11, 11.1) peut se déplacer dans le couvercle de pompe (1) et/ou le carter de pompe (3).

8. Pompe selon l'une quelconque des revendications 1 à 7, **caractérisée en ce que** la taille de la chambre haute pression (12) et/ou de la chambre basse pression (13) peut être modifiée.

9. Pompe selon l'une quelconque des revendications 1 à 8, **caractérisée en ce que** le couvercle de pompe (1), le carter de pompe (3) et/ou l'engrenage (2) sont en métal fritté.

10. Utilisation de la pompe selon l'une quelconque des revendications 1 à 9 pour actionner un régulateur d'arbre à cames, pour lubrifier un moteur, pour lubrifier une boîte de vitesses et/ou soutenir les passages de vitesse.

EP 1 685 328 B1

Fig. 1

9

Fig. 2.1

Fig. 2.2

Fig. 3

Fig.4

Fig.5

Fig.6

X 2:1

14

Schnitt A–A

Fig.7

Fig. 8

EP 1 685 328 B1

Fig.9

17

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19646359 A
- JP 1096484 A
- DE 19922792 A